# EUROPEAN PATENT APPLICATION

(11) **EP 2 717 268 A1**
(43) Date of publication of application: **09.04.2014**
(21) Application number: 13186762.4
(22) Date of filing: 30.09.2013
(51) Int. Cl.: G11B 27/034, G11B 27/11

(54) **Display apparatus and method for controlling thereof**

(30) Priority: 04.10.2012 KR 20120110333
(71) Applicant: Samsung Electronics Co., Ltd, Gyeonggi-do 443-742 (KR)
(72) Inventor: Lim, Byung-keuk, Gyeonggi-do (KR); Kim, Jung-su, Gyeonggi-do (KR)
(74) Representative: Brandon, Paul Laurence

(57) **Abstract**

A display apparatus and a method for controlling thereof include: a communication unit which receives a content, an output unit which outputs the received content, and a controller which, if the content is received, determines whether edition information for editing the content has been already set or not with reference to identification information included in the received content, and controls to output the content in one of a general reproducing mode and an editing-reproducing mode according to a result of the determination. Accordingly, the display apparatus edits a read only content.

## Description

### CROSS-REFERENCE TO RELATED APPLICATIONS

This application claims priority from Korean Patent Application No. 10-2012-0110333, filed on October 4, 2012, in the Korean Intellectual Property Office, the disclosure of which is incorporated herein by reference in its entirety.

### BACKGROUND

### 1. Field

Methods and apparatuses consistent with exemplary embodiments relate to a display apparatus and a method for controlling thereof, and more particularly, to a display apparatus which can edit a content and a method for controlling thereof.

### 2. Description of the Related Art

A related-art display apparatus edits only the content that is stored in a DVD-RW or a BD-RE, which is a read/write (RW) media, and generates a play list according to the edited content and stores the play list in the RW media which is being reproduced.

However, the RW media such as a DVD-RW or a BD-RE is problematic not only in utility and price aspects but also in a copyright aspect, and thus is not widely used. For this reason, contents are stored in a read only disk such as a blue-ray disk or an ultra HD disk and are released.

Since contents are stored in the read only disk, users should endure the inconvenience of not being able to edit the contents when using the contents stored in the read only disk.

For example, if all family members watch a movie stored in a read only disk, a user cannot perform an editing function such as deleting violent scenes from the movie. Therefore, the violent scenes included in the movie are displayed without any censorship and thus the movie may have a bad influence on children who have immature intellectual capacity.

Also, in another example, if a user re-watches the movie that is stored in a read only disk, the user cannot perform an editing function such as deleting unnecessary scenes. Therefore, the user should watch unnecessary scenes or fast forward the movie to skip the unnecessary scenes every time that the user watches the movie.

### SUMMARY

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a display apparatus which can easily edit a content that is stored in a recording medium such as a read only disk or a content that is set to be read only by a user, and a method for controlling thereof.

According to one or more exemplary embodiments, a display apparatus may include: a communication unit which receives a content; an output unit which outputs the received content; and a controller which, if the content is received, determines whether edition information for editing the content has been already set or not with reference to identification information included in the received content, and controls to output the content in one of a general reproducing mode and an editing-reproducing mode according to a result of the determination.

The edition information may be stored in at least one of the display apparatus and an external apparatus, and the edition information may include information for editing a reproducing section corresponding to a user command from among reproducing sections of the content, and identification information on the content.

The edition information may further include reproduction setting information of the content, and, if the edition information on the content has been already set, the controller may control to output the content in the general reproducing mode or to edit at least one reproducing section corresponding to the edition information from among the reproducing sections of the content and output the content, based on the reproduction setting information included in the edition information.

If the edition information on the content has been already set, the controller may control to generate a user interface screen to select the editing-reproducing mode and output the user interface screen.

The display apparatus may further include an input unit which receives a user command, and, if a user command to select the editing-reproducing mode is input through the user interface screen, the controller may control to edit at least one reproducing section corresponding to the edition information from among the reproducing sections of the content and output the content.

The display apparatus may further include an input unit which receives a user command, and, if the edition information on the content has not been set, the controller may control to output the content in the general reproducing mode.

If a user command to edit the content is input while the content is being output, the controller may generate edition information corresponding to the user command.

According to one or more exemplary embodiments, a method for controlling a display apparatus may include: receiving a content; determining whether edition information for editing the content has been already set or not with reference to identification information included in the received content; and outputting the content in one of a general reproducing mode and an editing-reproducing mode according to a result of the determination.

The edition information may be stored in at least one of the display apparatus and an external apparatus, and the edition information may include information for editing a reproducing section corresponding to a user command from among reproducing sections of the content, and identification information on the content.

The edition information may further include reproduction setting information of the content, and the outputting may include, if the edition information on the content has been already set, outputting the content in the general reproducing mode or editing at least one reproducing section corresponding to the edition information from among the reproducing sections of the content and outputting the content, based on the reproduction setting information included in the edition information.

The outputting may include, if the edition information on the content has been already set, generating a user interface screen to select the editing-reproducing mode and outputting the user interface screen.

The outputting may include, if a user command to select the editing-reproducing mode is input through the user interface screen, editing at least one reproducing section corresponding to the edition information from among the reproducing sections of the content and outputting the content.

The outputting may include, if the edition information on the content has not been set, outputting the content in the general reproducing mode.

The method may further include, if a user command to edit the content is input while the content is being output, generating edition information corresponding to the user command.

According to one or more exemplary embodiments described above, the display apparatus may edit the content that is stored in a recording medium reproducing apparatus such as a read only disk or the content that is set to be read only by a user.

### BRIEF DESCRIPTION OF THE DRAWINGS

These and/or other aspects will become apparent and more readily appreciated from the following description of embodiments, taken in conjunction with the accompanying drawings of which:
FIG. 1 is a block diagram illustrating a display apparatus according to one or more embodiments;
FIG. 2 is a block diagram illustrating a display apparatus in detail according to one or more embodiments;
FIG. 3 is a view illustrating an operation of generating edition information for editing a content in a display apparatus according to one or more embodiments;
FIG. 4 is a flowchart illustrating a method for controlling a display apparatus which edits and outputs a content according to one or more embodiments;
FIG. 5 is a flowchart illustrating a method for controlling a display apparatus which edits and outputs a content according to one or more embodiments; and
FIG. 6 is a flowchart illustrating a method for generating edition information in a display apparatus according to one or more embodiments.

### DETAILED DESCRIPTION

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

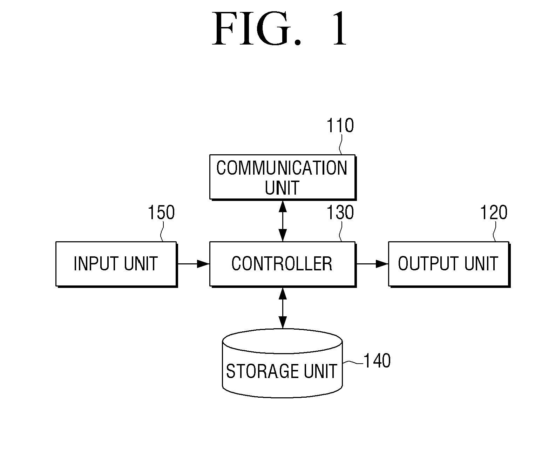

FIG. 1 is a block diagram illustrating a display apparatus according to one or more embodiments.

As shown in FIG. 1, the display apparatus may include a communication unit 110, an output unit 120, a controller 130, a storage unit 140, and an input unit 150.

The communication unit 110 may communicate with an external apparatus according to various communication methods and may receive a content, and the output unit 120 may output the content received through the communication unit 110. The external apparatus recited herein may be an apparatus that provides a content. If a content is received from the external apparatus, the controller 130 may determine whether edition information for editing the content is stored in the storage unit 140 or not with reference to identification information included in the received content. However, this should not be considered as limiting. The edition information for editing the content may be stored in the external apparatus, which is communicable with the display apparatus through the communication unit 110, besides the storage unit 140. Therefore, the controller 130 may determine whether the edition information for editing the content is stored in the storage unit 140 or the external apparatus, may set a reproducing mode of the content to one of a general reproducing mode and an editing-reproducing mode according to a result of the determination, and may output the content through the output unit 120. According to one or more embodiments, if the edition information for editing the content is stored in the storage unit 140 or the external apparatus, and if a user command to edit and reproduce the content is input by the user through the input unit 150, the controller 130 may edit at least one reproducing section corresponding to the edition information from among reproducing sections of the contents, based on the pre-stored edition information, and may output the content. On the other hand, if the edition information for editing the content is not stored, the controller 130 may set the reproducing mode of the content to the general reproducing mode and may output the content.

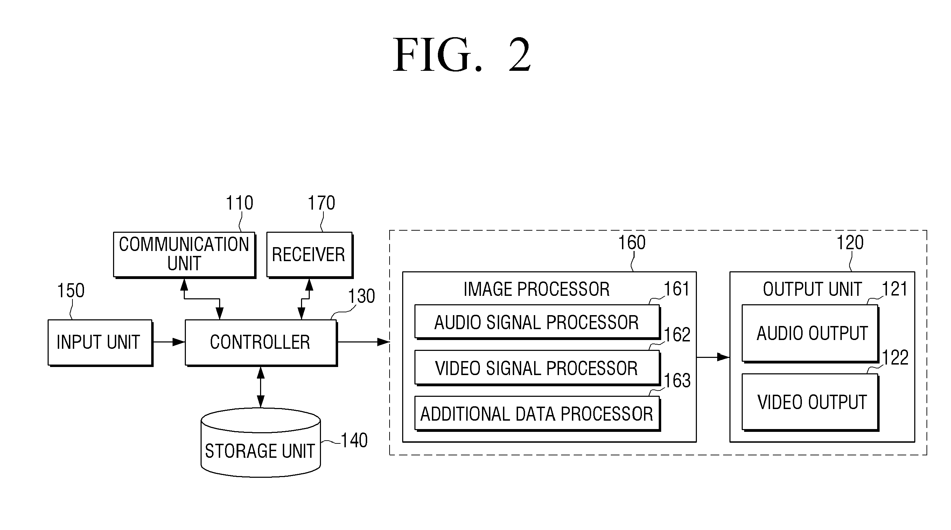

Up to now, the elements of the display apparatus, which edits the content according to the edition information, have been described. Hereinafter, the elements of a display apparatus according to one or more embodiments will be explained in detail with reference to FIG. 2.

FIG. 2 is a block diagram illustrating a display apparatus in detail according to one or more embodiments.

As described in FIG. 1, a display apparatus may generally include a communication unit 110, an output unit 120, a controller 130, a storage unit 140, and an input unit 150.

The communication unit 110, which may communicate with an external apparatus and receive a content, may include various communication modules such as, for example, a near field communication (NFC) module and a wireless communication module (not shown). The NFC module (not shown) is a communication module that wirelessly communicates with an external apparatus located at a near distance, and may be Bluetooth or Zigbee for example. The wireless communication module (not shown) is a communication module that is connected to an external network and communicates with an external apparatus according to a wireless communication protocol such as, for example, WiFi or IEEE. Besides these, the wireless communication module may further include a mobile communication module that is connected to a mobile communication network and communicates with an external apparatus according to various mobile communication standards such as 3^{rd} generation (3G), 3^{rd} generation partnership project (3GPP), and long term evolution (LTE).

However, this should not be considered as limiting. The display apparatus may further include a receiver 170, which receives a content from a broadcasting station through a broadcasting network or receives a content from a web server through the Internet. If a content is received from a broadcasting station through a broadcasting network, the receiver 170 may include a tuner (not shown), a demodulator (not shown), and an equalizer (not shown). If a content is received from a web server through the Internet, the receiver 170 may be realized by a network interface (not shown).

The receiver 170 may receive contents from various recording medium reproducing apparatuses, which are provided in the display apparatus or are connected to the display apparatus. The recording medium reproducing apparatus recited herein refers to an apparatus that reproduces contents stored in various types of recording media such as, for example, a CD, a DVD, a hard disk, a blue-ray disk, a memory card, and a USB memory.

If a content is received through one of the communication unit 110 and the receiver 170, the controller 130 may control to signal process audio and video data included in the received content. Specifically, the display apparatus may further include a signal processor 160, which performs signal processing with respect to audio and video data included in the content according to a control command of the controller 130. The signal processor 160 may include an audio signal processor 161 to perform signal processing with respect to the audio data included in the content, and a video signal processor 162 to perform signal processing with respect to the video data.

Specifically, if a content is received through one of the communication unit 110 and the receiver 170, the audio signal processor 161 may decode audio data included in the received content and may modulate the decoded audio data to an audio signal.

If a content is received through one of the communication unit 110 and the receiver 170, the video signal processor 162 may decode video data included in the received content. After that, the video signal processor 162 may scale up or down an image frame of the decoded video data to be suitable for an output screen size. If scaling is performed on the video data, the video signal processor 162 may convert a frame rate of the image frame of the scaled video data with reference to an output rate of the display apparatus.

The signal processor 160, which may signal process the audio and video data included in the received content in a format that can be output through the audio signal processor 161 and the video signal processor 162, may further include an additional data processor 163. The additional data processor 163 may determine whether the received content includes additional data such as an electronic program guide (EPG) and subtitles. If additional data is included as a result of the determination, the additional data processor 163 may add the additional data included in the content to an image frame corresponding to the additional data.

The output unit 120, which may output the received content, may include an audio output unit 121 and a video output unit 122. The audio output unit 121 may output the audio data which has been modulated to the audio signal by the audio signal processor 161 in an audible sound format, and the video output unit 122 may output the image frame of the video data the frame rate of which has been converted.

As described in FIG. 1, if a content is received through one of the communication unit 110 and the receiver 170, the controller 130 may determine whether edition information for editing the content has been already set or not with reference to identification information included in the received content. After that, according to whether the edition information for editing the received content has been already set or not, the controller 130 may control to set a reproducing mode of the content to one of a general reproducing mode and an editing-reproducing mode and output the content.

The edition information may refer to information that is stored in at least one of the display apparatus and the external apparatus, and specifically, may be stored in the storage unit 140 of the display apparatus or the external apparatus which is communicable with the display apparatus through the communication unit 110. The edition information may include information for editing a reproducing section corresponding to a user command from among the reproducing sections of the content, and identification information on the content. The identification information on the content may be a title of the content, for example.

Accordingly, if the content is received, the controller 130 may extract identification information from the received content. After that, the controller 130 may determine whether edition information including the identification information has been already set and stored in the storage unit 140 or the external apparatus, with reference to the extracted identification information. If the edition information on the received content has been already set as a result of the determination, the controller 130 may set the reproducing mode of the content to the general reproducing mode and output the content, or may set the reproducing mode to the editing-reproducing mode and output the content. That is, if the reproducing mode is set to the editing-reproducing mode, the controller 130 may edit a reproducing section that corresponds to the already set edition information from among reproducing sections of the content, and may output the content. That is, if the identification information included in the content, that is, a content title, is the same as that of the already set edition information, the reproducing mode may be converted into the editing-reproducing mode and the content may be edited according to the already set edition information, even if the content is provided from a different source apparatus (an external apparatus, a recording medium reproducing apparatus, a web server, and a broadcasting station).

According to one or more embodiments, the controller 130 may set the reproducing mode of the received content to the general reproducing mode or the editing-reproducing mode based on reproducing setting information included in the edition information, and may output the content. The reproduction setting information recited herein may refer to information which has been set by the user in advance regarding whether the received content is output in the general reproducing mode or the editing-reproducing mode. For example, the user may set the reproduction setting information so that the content in which edition information is set can be edited and output. In this case, the controller 130 may edit a reproducing section that corresponds to the edition information from among reproducing sections of the content according to the reproduction setting information included in the already set edition information, and may output the content.

In another example, the user may set the reproducing mode of the received content according to time. For example, if the reproduction setting information is set so that the content is output in the editing-reproducing mode until 10 p.m., and, if the content is received before 10 p.m., the controller 130 may edit the reproducing section that corresponds to the edition information from among the reproducing sections of the content, and may output the content. If the content is received after 10 p.m., the controller 130 does not edit the received content and outputs the content in the general reproducing mode.

According to one or more embodiments, if the edition information on the received content has been already set, the controller 130 may control to generate a user interface screen to select the editing-reproducing mode and output the user interface screen. Specifically, with reference to identification information included in the received content, the controller 130 may determine whether edition information including the identification information has been already set and stored in the storage unit 140 or the external apparatus. If the edition information on the received content has been already set as a result of the determination, the controller 130 may generate a user interface screen to select the editing-reproducing mode. Accordingly, the output unit 120 may output the user interface screen to select the editing-reproducing mode on a screen. As the user interface screen to select the editing-reproducing mode is displayed on the screen, the user may identify that the edition information has been set and stored in advance in connection with the currently received content, and may select the reproducing mode of the content. If a user command to select the editing-reproducing mode is input through the input unit 150, the controller 130 may control to edit at least one reproducing section that corresponds to the edition information on the content from among the reproducing sections of the content, and output the content. On the other hand, if a user command to select the general reproducing mode is input through the input unit 150, the controller 130 may control to output the content in the general reproducing mode without editing the content.

If the edition information on the received content has been already set as described above, and, if the reproduction setting information is included in the edition information or the user command to select the editing-reproducing mode is input by the user, the controller 130 may edit the content according to the already set edition information and output the content.

On the other hand, if the edition information on the received content has not been set and stored in at least one of the storage unit 140 and the external apparatus, the controller 130 may output the content in the general reproducing mode.

If a user command to edit the content is input by the user through the input unit 150 in the state that the content is being output in the general reproducing mode or the editing-reproducing mode according to whether the edition information on the content has been already set or not, the controller 130 may generate edition information corresponding to the input user command and may store the edition information in at least one of the storage unit 140 and the external apparatus.

Specifically, if a user command to edit the content is input through the input unit 150 when the content is being output through the output unit 120, the controller 130 may generate edition information on a reproducing section of the content corresponding to the time that the user command is input. After that, the controller 130 may determine whether edition information on the content has been already set and stored in at least one of the storage unit 140 and the external apparatus. As a result of the determination, if edition information on the content has not been set, the controller 130 may generate edition information including the identification information of the content and edition information on the reproducing section of the content corresponding to the time that the user command is input, and store the edition information in at least one of the storage unit 140 and the external apparatus.

On the other hand, if the edition information on the content has been already set as a result of the determination, the controller 130 may determine whether edition information on the reproducing section of the content corresponding to the time that the user command is input has been already set or not with reference to the already set edition information. If the edition information on the reproducing section has been already set as a result of the determination, the controller 130 may generate a notice message informing that the edition information has been already set and outputs the notice message. If it is determined that the edition information on the reproducing section of the content corresponding to the time that the user command is input has not been set, the controller 130 may add the edition information on the reproducing section to the already set edition information, and may generate a notice message informing that the edition information has been added and may output the notice message.

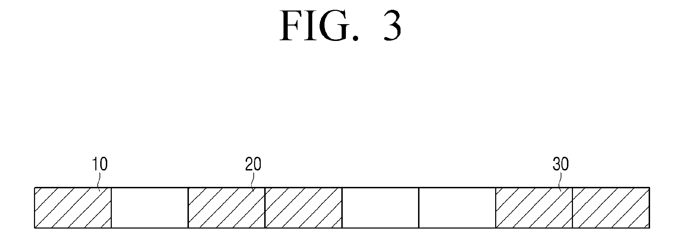

FIG. 3 is a view illustrating an operation of generating edition information for editing a content in a display apparatus according to one or more embodiments.

As shown in FIG. 3, a received content may consist of 1^{st} to 8^{th} image frames. The user may request editing of the 1^{st} image frame 10, the 3^{rd} and 4^{th} image frames 20, and the 7^{th} and 8^{th} image frames 30, such as deleting or repeating the image frames, from among the 1^{st} to 8^{th} image frames. If such a user command to edit is input, the controller 130 may generate edition information which includes edition information on the 1^{st} image frame 10, the 3^{rd} and 4^{th} image frames 20, and the 7^{th} and 8^{th} image frames 30 and identification information of the content, and may store the edition information in at least one of the storage unit 140 and the external apparatus.

If the content is received in the state that the edition information of the content has been already set, the controller 130 may edit a reproducing section corresponding to the already set edition information from among reproducing sections of the content according to a predetermined event condition. That is, the controller 130 may edit the first image frame 10, the 3^{rd} and 4^{th} image frames 20, and the 7^{th} and 8^{th} image frames 30 from among the 1^{st} to 8^{th} image frames of the content based on the already set edition information. At this time, the controller 130 may edit audio data and additional data corresponding to the 1^{st} image frame 10, the 3^{rd} and 4^{th} image frames 20, and the 7^{th} and 8^{th} image frames 30, and may output the audio data and the additional data.

Up to now, the operation for editing the received content in the display apparatus according to one or more embodiments has been described in detail. Hereinafter, a method for editing a received content and displaying the content in a display apparatus according to one or more embodiments will be explained.

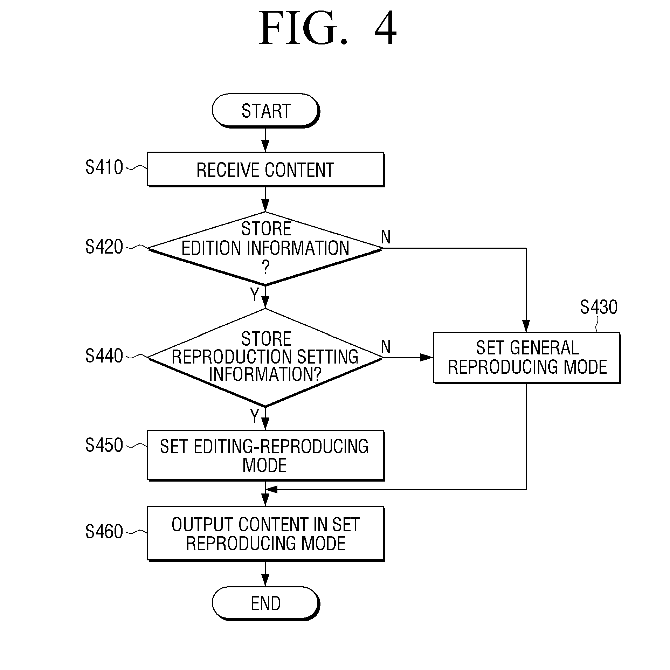

FIG. 4 is a flowchart illustrating a method for controlling a display apparatus which edits and outputs a content according to one or more embodiments.

As shown in FIG. 4, the display apparatus may communicate with an external apparatus and receive a content (S41 0). Specifically, the display apparatus may communicate with the external apparatus through, for example, an NFC module such as Bluetooth and Zigbee or a wireless communication module, which is connected to an external network according to a wireless communication protocol such as WiFi and IEEE and may perform communication, and may receive the content.

However, this should not be considered as limiting. The display apparatus may receive a content from a broadcasting station through a broadcasting network or receive a content from a web server through the internet. Also, the display apparatus may receive a content from various types of recording medium reproducing apparatuses which are provided in the display apparatus or are connected to the display apparatus, such as, for example, a CD, a DVD, a hard disk, a blue-ray disk, and a memory card.

If the content is received from various source apparatuses (an external apparatus, a broadcasting station, a web server, and a recording medium reproducing apparatus, etc.), the display apparatus may determine whether edition information for editing the content has been already set or not with reference to identification information included in the content (S420). The edition information for editing the content may be stored in at least one of the display apparatus and the external apparatus. Such edition information may include information for editing a reproducing section corresponding to a user command from among reproducing sections of the content and identification information on the content. The identification information on the content may be a title of the content, for example.

Accordingly, if the content is received from the source apparatus, the display apparatus may extract the identification information included in the received content, and determine whether the edition information including the identification information has been already set and stored in the display apparatus or the external apparatus with reference to the extracted identification information. As a result of the determination, if the edition information including the identification information of the received content has not been set, the display apparatus may set a reproducing mode of the received content to a general reproducing mode (S430).

On the other hand, if the edition information including the identification information of the received content has been already set as a result of the determination, the display apparatus may determine whether the edition information includes reproduction setting information or not (S440). The reproduction setting information may be information that has been set in advance by the user so that the received content is output in an editing-producing mode based on the edition information. Accordingly, if the already set edition information does not include reproduction setting information, the display apparatus may set the reproducing mode of the received content to the general reproducing mode as in operation S430. If the already set edition information includes the reproduction setting information, the display apparatus may set the reproducing mode of the received content to the editing-reproducing mode (S450).

However, this should not be considered as limiting. The reproduction setting information may be information that has been set in advance by the user so that the received content is output in the editing-reproducing mode based on the edition information or is output in the general reproducing mode. For example, the user may set the reproducing mode of the received content according to time. For example, if the reproduction setting information is set so that the content is output in the editing-reproducing mode until 10 p.m., and, if the content is received before 10 p.m., the display apparatus may set the reproducing mode of the content to the editing-reproducing mode. If the content is received after 10 p.m., the display apparatus may set the reproducing mode of the received content to the general reproducing mode.

If the reproducing mode of the received content is set as described above, the display apparatus may output the content in the general reproducing mode or may edit the content based on the already set edition information and output the content, according to the set reproducing mode.

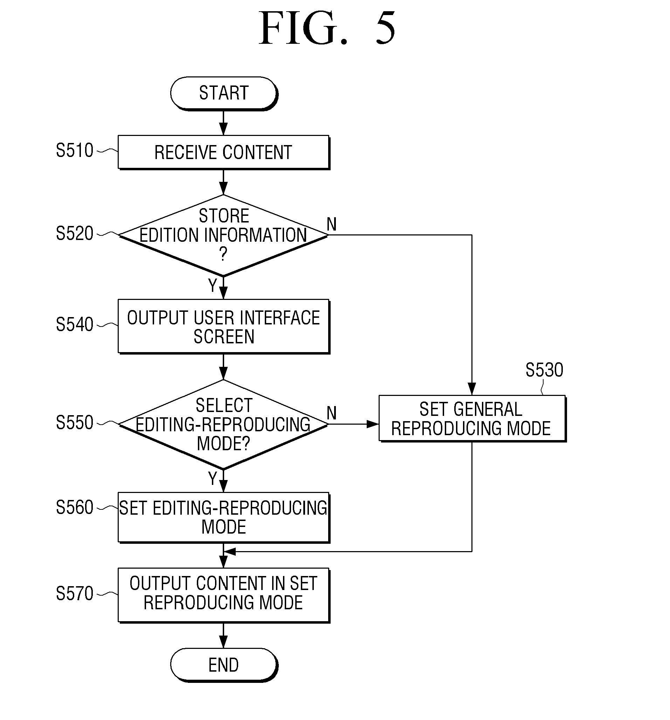

FIG. 5 is a flowchart illustrating a method for controlling a display apparatus which edits and outputs a content according to one or more embodiments.

As shown in FIG. 5, a display apparatus may communicate with an external apparatus and receive a content (S510). Specifically, the display apparatus may communicate with the external apparatus through, for example, an NFC module such as Bluetooth and Zigbee or a wireless communication module, which is connected to an external network according to a wireless communication protocol such as, for example, WiFi and IEEE and performs communication, and may receive the content.

However, this should not be considered as limiting. The display apparatus may receive a content from a broadcasting station through a broadcasting network or receive a content from a web server through the internet. Also, the display apparatus may receive a content from various types of recording medium reproducing apparatuses which are provided in the display apparatus or are connected to the display apparatus, such as a CD, a DVD, a hard disk, a blue-ray disk, and a memory card.

If the content is received from various source apparatuses (an external apparatus, a broadcasting station, a web server, and a recording medium reproducing apparatus, etc.) as described above, the display apparatus may determine whether edition information for editing the content has been already set or not with reference to identification information included in the received content (S520). The edition information for editing the content may be stored in at least one of the display apparatus and the external apparatus. Such edition information may include information for editing a reproducing section corresponding to a user command from among reproducing sections of the content, and identification information on the content. The identification information on the content may be a title of the content, for example.

Accordingly, if the content is received from the source apparatus, the display apparatus may extract the identification information included in the received content, and determine whether edition information including the identification information has been already set and stored in the display apparatus or the external apparatus with reference to the extracted identification information. If the edition information including the identification information of the received content has not been set as a result of the determination, the display apparatus may set a reproducing mode of the received content to a general reproducing mode (S530).

If the edition information including the identification information of the received content has been already set as a result of the determination, the display apparatus may generate a user interface screen to select an editing-reproducing mode and may output the user interface screen (S540). Since the user interface screen to select the editing-reproducing mode is output on the screen, the user may identify that the edition information has been set and stored in advance in connection with the currently received content, and may select the reproducing mode of the content. If such a user command is input, the display apparatus may determine whether the user command relates to the editing-reproducing mode or the general reproducing mode (S550).

If the user command relates to the general reproducing mode, the display apparatus may set the reproducing mode of the content to the general reproducing mode as in operation S530. On the other hand, if the user command relates to the editing-reproducing mode, the display apparatus may set the reproducing mode of the received content to the editing-reproducing mode (S560).

If the reproducing mode of the received content is set, the display apparatus may output the content in the general reproducing mode or edit a reproducing section corresponding to the already set edition information from among reproducing sections of the content and output the content, according to the set reproducing mode (S570).

In FIGS. 4 and 5, the display apparatus, which may set the reproducing mode of the received content to the general reproducing mode or the editing-reproducing mode and may output the content, may perform signal processing with respect to audio and video data included in the received content in a format that can be output, and may output the content. The operation of signal processing the audio and video data included in the content in the format that can be output has been described above with reference to FIG. 2, and thus a detailed description is omitted.

Hereinafter, a method for reproducing edition information on at least one reproducing section from among reproducing sections of a received content in a display apparatus according to a user request will be explained.

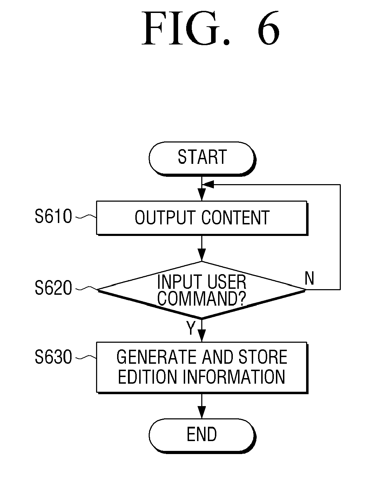

FIG. 6 is a flowchart illustrating a method for generating edition information in a display apparatus according to one or more embodiments.

As shown in FIG. 6, the display apparatus may output a content received from a source apparatus in audio and video formats (S610). The content output in the audio and video formats may be set in a general reproducing mode or may be set in an editing-reproducing mode based on already set edition information. In the state that the received content is being output in the general reproducing mode or the editing-reproducing mode, if a user command is input, the display apparatus may generate edition information on a reproducing section of the content corresponding to the time that the user command is input (S620 and S630).

Specifically, if a user command to edit the content is input, the display apparatus may determine whether edition information on the content has been already set and stored in at least one of the display apparatus and an external apparatus or not. That is, with reference to identification information of the output content, the display apparatus may determine whether edition information including the identification information of the content has been already set and stored in at least one of the display apparatus and the external apparatus. If the edition information on the content has not been set as a result of the determination, the display apparatus may generate edition information which includes the identification information of the output content and edition information on the reproducing section of the content corresponding to the time that the user command is input, and may store the edition information in at least one of the display apparatus and the external apparatus.

On the other hand, if the edition information on the content has been already set and stored as a result of the determination, the display apparatus may determine whether edition information on the reproducing section of the content corresponding to the time that the user command is input has been already set or not with reference to the already set edition information. If the edition information on the reproducing section has been already set, the display apparatus may output a notice message informing that the edition information has been already set. On the other hand, if it is determined that the edition information on the reproducing section of the content corresponding to the time that the user command is input has not been set, the display apparatus may add the edition information on the reproducing section to the already set edition information, and generate a notice message that the edition information has been added and output the notice message.

As described above, if the user command to edit is input in the state that the content is being output, the display apparatus may generate edition information on the reproducing section of the content corresponding to the time that the user command is input and may store the edition information.

Up to now, exemplary embodiments of the present disclosure have been mainly described.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

In one or more embodiments, any apparatus, system, element, or interpretable unit descriptions herein include one or more hardware devices or hardware processing elements. For example, in one or more embodiments, any described apparatus, system, element, retriever, pre or post-processing elements, tracker, detector, encoder, decoder, etc., may further include one or more memories and/or processing elements, and any hardware input/output transmission devices, or represent operating portions/aspects of one or more respective processing elements or devices. Further, the term apparatus should be considered synonymous with elements of a physical system, not limited to a single device or enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be any defined, measurable, and tangible distributed network, so that the computer readable code is stored and executed in a distributed fashion. Still further, as only an example, the processing element could include a processor or a computer processor, and processing elements may be distributed and/or included in a single device.

The computer-readable media may also be embodied in at least one application specific integrated circuit (ASIC) or Field Programmable Gate Array (FPGA), as only examples, which execute (e.g., processes like a processor) program instructions.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles and spirit of the invention, the scope of which is defined in the claims and their equivalents.

## Claims

1. A display apparatus comprising:
a communication unit which receives a content;
an output unit which outputs the received content; and
a controller which determines, by way of one or more processors, whether edition information for editing the content is set with reference to identification information included in the received content, and controls the output unit to output the content in one of a general reproducing mode when the edition information is not set and an editing-reproducing mode when the edition information is set.

2. The display apparatus as claimed in claim 1, wherein the edition information is stored in at least one of the display apparatus and an external apparatus, and
wherein the edition information comprises a user command for editing a reproducing section among a plurality of reproducing sections of the content, and identification information on the content.

3. The display apparatus as claimed in claim 2, wherein the edition information further comprises reproduction setting information of the content, and
wherein, when the edition information on the content is set, the controller controls the output unit to output the content in the general reproducing mode or to edit at least one reproducing section corresponding to the edition information from among the reproducing sections of the content and output the content, based on the reproduction setting information included in the edition information.

4. The display apparatus as claimed in claim 2 or 3, wherein, when the edition information on the content is set, the controller controls the output unit to generate a user interface screen to select the editing-reproducing mode and to output the user interface screen.

5. The display apparatus as claimed in claim 4, further comprising an input unit which receives a user command,
wherein, when a user command to select the editing-reproducing mode is input through the user interface screen, the controller edits at least one reproducing section corresponding to the edition information from among the reproducing sections of the content and controls the output unit to output the content.

6. The display apparatus as claimed in any one of claims 2 to 5, further comprising an input unit which receives a user command,
wherein, when the edition information on the content is not set, the controller controls to output the content in the general reproducing mode.

7. The display apparatus as claimed in any one of claims 1 to 6, wherein, when a user command to edit the content is input while the content is being output, the controller generates edition information corresponding to the user command.

8. A method for controlling a display apparatus, the method comprising:
receiving a content;
determining, by way of one or more processors, whether edition information for editing the content is set with reference to identification information included in the received content; and
outputting the content in one of a general reproducing mode when the edition information is not set and an editing-reproducing mode when the edition information is set.

9. The method as claimed in claim 8, wherein the edition information is stored in at least one of the display apparatus and an external apparatus, and
wherein the edition information comprises a user command for editing a reproducing section among a plurality of reproducing sections of the content, and identification information on the content.

10. The method as claimed in claim 9, wherein the edition information further comprises reproduction setting information of the content, and
wherein the outputting comprises, when the edition information on the content is set, outputting the content in the general reproducing mode or editing at least one reproducing section corresponding to the edition information from among the reproducing sections of the content and outputting the content, based on the reproduction setting information included in the edition information.

11. The method as claimed in claim 9 or 10, wherein the outputting comprises, when the edition information on the content is set, generating a user interface screen to select the editing-reproducing mode and outputting the user interface screen.

12. The method as claimed in claim 11, wherein the outputting comprises, when a user command to select the editing-reproducing mode is input through the user interface screen, editing at least one reproducing section corresponding to the edition information from among the reproducing sections of the content and outputting the content.

13. The method as claimed in any one of claims 9 to 12, wherein the outputting comprises, when the edition information on the content is not set, outputting the content in the general reproducing mode.

14. The method as claimed in any one of claims 8 to 13, further comprising, when a user command to edit the content is input while the content is being output, generating edition information corresponding to the user command.
